# EUROPEAN PATENT APPLICATION

(11) **EP 4 458 785 A1**
(43) Date of publication of application: **06.11.2024**
(21) Application number: 23171070.8
(22) Date of filing: 02.05.2023
(51) Int. Cl.: C04B 18/02, C04B 26/04, C04B 26/20

(54) **GRANULATE FROM BIOCHAR AND TANNIN BINDER AND SHAPED OBJECTS OBTAINED THEREFROM**

(71) Applicant: Made of Air GmbH, 12053 Berlin (DE)
(72) Inventor: The designation of the inventor has not yet been filed
(74) Representative: Banse & Steglich Patentanwälte PartmbB

(57) **Abstract**

Subject of the invention is a granulate from granules, which comprise biochar particles which are impregnated with a tannin binder. The invention also relates to shaped objects and construction materials which are obtainable from compositions comprising an organic polymer and the granulate, and methods and uses related to the granulate.

## Description

The invention relates to granulate based on biochar which is impregnated with a tannin binder. The invention also relates to shaped objects and construction materials, which are produced from organic polymers and the granulate, and methods and uses related thereto.

### State of the art

Various approaches are presently suggested and investigated for controlling the carbon dioxide content in the atmosphere. An especially effective approach is carbon (dioxide) sequestration and long-term storage in functional materials. It is desirable that such functional materials can be produced easily and conveniently, that they are of practical use, and that they can store high amounts of carbon. In this regard, construction and building materials are of special interest. Construction materials are used in high amounts, and the construction sector is responsible for a large share of total worldwide carbon dioxide release. Construction materials have the potential to store large quantities of carbon over long time periods.

Biochar is the lightweight black residue, made of carbon and ashes, which is obtained by pyrolysis of biomass. Pyrolysis is partial thermal degradation in an oxygen-controlled atmosphere. Biochar is widely used as a combustible and in agriculture to reduce runoff and increase soil fertility and crop yields. Since biochar consists mostly of carbon from the atmosphere, it is also a potentially interesting material for carbon sequestration and storage. Compared to other carbon storing organics such as carbohydrates, biochar displays a high recalcitrance, which prevents decomposition and re-entry of stored carbon into the atmosphere. As demonstrated by a growing body of data, biochar can remain stable under normal environmental conditions for hundreds of years.

It has been proposed in the art to store carbon in composite materials from polymer materials and carbon-based fillers. If such composites could be provided for construction applications, carbon could be stored in large amounts for long time periods. Various composite materials have been described in the art in which biochar fillers are incorporated into polymer materials. A summary is provided in Das et al., 2021. Composites prepared by extrusion and moulding compositions comprising polyethylene and biochar filler are described in Zhang et al., 2017. However, such composites and the methods for their production have many drawbacks, which are presently limiting widespread commercial use.

It is a general problem that biochar powder is difficult to handle and process. For uniform compounding with polymers, biochar powder from particles in the lower micrometer range is required, which exhibits excessive dusting. The dusting causes safety hazards for the user, and can pollute and even damage the machinery and devices for processing and compounding. The low density of dusty biochar particles makes handling even more difficult and prevents rapid processing.

It is a further problem that biochar has high intrinsic hydrophilicity, which can lead to water absorption during processing, handling and storing. Polymers are generally compounded at high temperature. When polymers are compounded with biochar as a filler, the absorbed water is released during heating and can incur hydrolytic degradation of polymers. This causes problems for polymers susceptible to hydrolysis, such as polyamide, polyethylene terephthalate or polycarbonate. The water release of biochar can also lead to respective problems with various conventional additives, such as polyvinyl alcohol or sodium silicate.

It is a further problem that the compatibility of hydrophilic biochar with organic polymers is often not high, especially if the polymers are hydrophobic. In such cases, it is difficult to provide a uniform moulding composition. Therefore, it is often not possible to provide a composite comprising high amounts of biochar, which is uniform and stable. Composites with higher amounts of biochar tend to become brittle and to fracture, when subjected to common moulding techniques, such as compression moulding or injection moulding. Therefore, it is difficult to provide composites which comprise high levels of biochar filler, and which are at the same time mechanically stable and have a uniform structure.

For improving the stability of polymer composites, it has been suggested in the art to modify the surface of carbon-based fillers with coupling agents. For example, a composite material based on epoxidized natural rubber and rice husk ash filler, which is modified with a silane coupling agent, is disclosed in Pongdong et al., 2015. The coupling agent comprises sulfur and supports a vulcanization reaction. However, the method and composite have various drawbacks. The product is relatively complicated, and epoxidized rubber and the coupling agent are costly. Further, vulcanized rubbers are elastic and have low thermal stability.

There is no suggestion to use the composite for permanent carbon storage or in construction applications

JP2004195679 A relates to a moulded article prepared from hydrophilic natural polymers, such as cellulose or collagen, and charcoal powder. The surface of the moulded object is coated with a natural material, such as tannin, sodium alginate or glucomannan. The document does not relate to composites based on synthetic polymers.

CN1 12473622 A discloses the production of a modified charcoal material for adsorbing high concentration phenol-containing wastewater. The modified biochar is obtained by a process in which biochar is pyrolyzed, reacted with a solution of nitric acid and tannic acid, and dried. The document does not relate to composites based on synthetic polymers.

Briens and Bowdon-Green, 2020, disclose methods for preparing granulates from biochar powder and HPMC, molasses or ammonium nitrate solutions. The document does not relate to composites based on synthetic polymers.

Peng et al., 2021, describe pressed pellets prepared from biochar and various binders, such as polyethylene, PET, lignin or starch. The pellets are used as fuels. The document does not relate to composites for permanent storage of carbon, such as construction materials.

There is a continuous need for improved and efficient materials and methods, which overcome the problems of the prior art as outlined above.

### Problem underlying the invention

The problem underlying the invention is to provide materials and methods, which overcome the problems of the prior art outlined above.

The problem underlying the present invention is to provide materials for permanently storing large amounts of carbon which has been sequestered from the atmosphere. The materials shall be suitable for construction and building applications. The materials should have high stability, such as mechanical, thermal and chemical stability. Preferably, the materials should have high density for efficient carbon storage, and low water uptake for high stability.

Further, the materials should be easily available from conventional raw materials at low costs. They should be available by convenient and simple procedures, which do not lead to safety problems during handling and processing. Overall, the materials should be suitable for mass production.

### Disclosure of the invention

Surprisingly, it was found that the problem underlying the invention is overcome by granulates, shaped objects, construction materials, methods and uses according to the claims. Further embodiments of the invention are outlined throughout the description.

Subject of the invention is a granulate from granules, which comprise biochar particles which are impregnated with a tannin binder. The granulate of the invention is suitable for producing shaped objects from compositions comprising organic polymer and the granulate by moulding.

The granulate comprises a plurality of biochar particles, which are attached to each other by tannin and/or a partially cured tannin. The granulate is obtainable by granulation. Granulation is a process in which primary powder particles, in the present case biochar particles, are made to adhere to form larger, multiparticle entities called granules. Therefore, each granule comprises a plurality of biochar powder particles. In the present invention, the adhesion of biochar particles to each other in the granules is promoted by the tannin binder. When the biochar particles are impregnated with tannin binder, the surface of the biochar particles is coated at least in part. The tannin coating has the effect that the biochar particles adhere to each other.

In a preferred embodiment, the granules have an average diameter of 200 µm to 10 mm, preferably between 500 µm and 5 mm. In a preferred embodiment, the granules have diameters in the range of 200 µm to 10 mm, preferably 200 µm to 5 mm. The diameter can be determined by Dynamic Image Analysis according to ISO 13322-2. Granules having such dimensions can be especially suitable for compounding with organic polymers for preparing moulded shaped objects.

The granulate comprises biochar. Biochar is a lightweight carbon-based material which is produced by pyrolysis of biomass, such as wood or other plant material. Pyrolysis is partial thermal degradation of the biomass in an oxygen-controlled atmosphere. The biochar can be grinded or milled into fine powder. Preferably, the biochar is from wood. Biochar is characterized by its high 13C isotope level, which distinguishes it clearly from coal of fossil origin, reaction products and derivatives thereof. Only biochar storage can sequester carbon from the atmosphere. The use of biochar in the inventive method is advantageous for environmental reasons, because a large quantity of carbon can be stored permanently in the composite material. An amount of 1 kg biochar contains approximately 680 to 820 g carbon, which is equivalent to about 2.5 to 3 kg carbon dioxide. When biochar is permanently stored in the composite material, the atmosphere can be depleted permanently from an equivalent amount of carbon dioxide. This can have a relevant environmental impact if large amounts of biochar-based materials are used in construction applications.

In a preferred embodiment, the biochar particles are relatively fine. Preferably, the average particle size is 1 µm to 500 µm, more preferably 5 µm to 100 µm. In a preferred embodiment, the biochar particles have particle sizes in the range of 1 µm to 500 µm, preferably 5 µ m to 100 µm. Preferably, the maximum particle size is smaller than 100 µm, or smaller than 67 µm. For example, such a composition can be obtained by sieving. Particle sizes can be determined according to DIN ISO 2591-1:1988. It was found that biochar having small particle sizes can be efficiently processed into granules with the tannin binder, and integrated in high amounts into the composite materials with organic polymers.

For example, the granules may comprise > 70 wt.% biochar, or > 80 wt.% biochar, based on all solid components. In another embodiment, the binder may comprise 70 to 98% biochar. A high biochar content can be advantageous for storing a high amount of carbon.

The biochar particles are impregnated with tannin binder. The binder is a liquid binder. For environmental and cost reasons, it is highly preferred that the binder is aqueous. Preferably, the water is the only solvent in the binder.

The binder comprises tannin (tannins). Tannins are a class of water-soluble phenolic compounds, which are obtained from biomass. Tannins are the fourth most abundant class of biochemical compounds in terrestrial biomass after cellulose, hemicelluloses and lignin, and are found in the bark, wood, leaves, fruits, and roots of a wide variety of vascular plants. The tannin can be or can comprise tannic acid (CAS Number 1401-55-4), or can be condensed, complex or modified tannin. Since tannin is a natural product, its structure is generally not uniform. Basically, tannins can be divided into four classes which are condensed, hydrolysable, complex and phlorotannins. Complex tannins have a molecular structure that can be considered a mixture of hydrolysable and condensed sub-units, including gallic, ellagic and catechin sub-units.

In a preferred embodiment, the tannin is a hydrolysable tannin or pholorotannin. More preferably, the tannin is tannic acid. Hydrolyzable tannins comprise a monosaccharide core, usually glucose, which is esterified with gallic acid, forming the gallotannins, or with hexahydrodiphenoic acid, the precursor of ellagic acid, and gallic acid, thereby forming ellagitannins. Tannic acid, also known as gallotannin, is comprised of mixtures from various plant-based sources. According to the invention, it was found that efficient granulation of the biochar can be performed with tannic acid, and that stable composites can be obtained with organic polymers.

In a preferred embodiment, the tannin is modified and/or condensed. Tannin, for example in the form of tannic acid, is susceptible to condensation reaction, especially in the presence of a curing agent. Thereby, tannin can be converted into tannin oligomers or polymers. The condensation of tannin, by itself or with a curing agent, can be supported by a catalyst, such as an acid, for example sulfonic acid.

In another embodiment, the tannin is condensed tannin. Condensed tannin (proanthocyanidins, polyflavonoid tannins, catechol-type tannins, pyrocatecollic type tannins, non-hydrolysable tannins or flavolans) are polymers formed by condensation of flavanol units. Typically, they do not contain sugar residues and the phenolic hydroxyl groups are totally or partially esterified with gallic acid. Condensed tannins represent more than 90% of the worldwide production of commercial tannins. The condensed tannins can be procyanidins, propelargonidins, prodelphinidins, profisetinidins, proteracacinidins, proguibourtinidins or prorobinetidins. For example, the condensed tannins are selected from mimosa and wattle, birch, larch, Norway spruce, Aleppo pine, willow or quebracho.

For example, the binder may comprise > 90% tannin, or > 80 % tannin, based on all solid components of the binder. In another embodiment, the binder may comprise 10 to 90% tannin. The water content of the aqueous binder is preferably 40% to 95%, more preferably 50% to 90% by weight. Unless stated otherwise, all percentages herein are in percent by weight.

The tannin is capable of curing. Preferably, the tannin is cured during granulation and/or during production of the shaped part. During curing, covalent bonds are formed between tannin hydroxyl groups, typically in a condensation reaction. Preferably, curing is supported by heating. Typically, covalent bonds are also formed between functional groups on the biochar surface and the binder during curing. Thereby, the binder forms a polymer matrix and becomes adhered to the biochar. The curing can support agglomeration of biochar particles to granules. Curing of tannin can also increase the strength of the moulded composite.

In a preferred embodiment, the granulate comprises
(i) 50% to 98% biochar, and
(ii) 2% to 50% tannin,
wherein the % relate to weight, based on the total amount of solids. The granulate may also comprise additives, for example between 0% and 28%. Preferably, the granulate comprises at least 5% or at least 10% tannin. Preferably, the granulate comprises 60% to 95% biochar, and 5% to 40% tannin. Preferably, the total amount of components (i), (ii) and additives is 100%.

In a preferred embodiment, the biochar and tannin are the only structural components of the granules. The structural components are the components which form the granule matrix, i.e. the filler (biochar) and the component which adheres the biochar particles to each other (the tannin). In further embodiments, the binder comprises additional structural components. For example, the granules may comprise an additional filler, for example an inorganic filler, or an additional binder, preferably a binder from biomass, such as starch.

In further embodiments, the binder comprises one or more additives. Preferably, the additives is a functional additive, which is included for modifying the properties of the granulate, or for facilitating processing, such as compounding with the polymer, or for modifying the properties of the moulding composition or shaped part. For example, the additive can be an adhesion promoter, anti-foaming agent, wetting agent, UV stabilizer, colorant, flame retardant, pH adjusting agent or processing aid. In a specific embodiment, the additive is not a polymer.

Typically, the aqueous binder composition comprises impurities. This is normal when using natural products such as tannins, which can be provided in the art at low purity for industrial applications. For example, the tannin may comprise up to 5%, up to 10% or even up to 20% impurities.

In a preferred embodiment, the binder comprise a curing agent. The curing agent is capable of forming covalent bonds with tannin. Thereby, a polymer network is formed in which tannin molecules and the curing agent are linked to each other, and typically also become attached to the biochar surface. Curing agents which are suitable for crosslinking tannin are known in the art. They react with hydroxylic groups of tannin, typically in a condensation reaction. It is advantageous that the biochar can absorb water from the condensation reaction, because water depletion can support the condensation reaction, and the granules can be dried more rapidly.

In a preferred embodiment, the curing agent is an aldehyde, amine or anhydride. Preferably, the curing agent is selected from hexamine, formaldehyde, glyoxal and maleic anhydride. Preferably, the curing agent is a low molecular weight compound, and thus not a polymer. Preferably, the amount of the curing agent in the binder is between 2% to 25%, preferably between 5% to 15%, of the dry weight of tannin. Accordingly, a polymer network of crosslinked tannin can be obtained, which becomes attached to the biochar particles. Typically, covalent bonds are also formed between functional groups of the biochar surface and the binder during curing. Thereby, the curing agent can support agglomeration and the internal strength of the granules. In another embodiment, the curing agent is not formaldehyde, because the compound may not be desirable for safety concerns.

In a preferred embodiment, the tannin is not oxidized before or during impregnation of the biochar. Preferably, the tannin is not combined with nitric acid and/or nitrate.

In a preferred embodiment, the granules comprise the tannin in a partially cured state. In this embodiment, the tannin can be is cured in two stages. In the first stage, the tannin is partially cured during granulation, and if present reacts with the curing agent. In the second stage, the reaction is completed during or after moulding the polymer composite. Preferably, the polymer matrix of the shaped object is fully cured. Partial curing of the granulate is advantageous, because it can provide a desired degree of stability to the granules. When the moulded object is consolidated, the stability can be increased by curing the residual reactive sites. The degree of curing can be controlled by adjusting the process conditions such as temperature and reaction time, initially for granulation, and later for moulding and consolidation of the polymer composition.

In a preferred embodiment, the granulate is used as a "master batch'". This means that a granulate is provided which has a defined composition and defined properties. The master batch can be used for further processing, especially for producing moulded parts in combination with organic polymers. The inventive granulate can advantageously be used as a master batch, because it is highly stable. It was found that its water adsorption is low, such that that the granulate does not tend to become sticky. Therefore, it can be stored, handled and processed conveniently. Based on the mater batch granulate, the user can produce uniform composites, without undesirable variations of the production process or properties.

In the inventive granulate, the use of the curable tannin binder, and application of a two-stage curing process, enable the specific biochar properties to be customized for a particular application. The biochar particles, which are otherwise difficult to handle and process, can be provided in a form which is desirable and advantageous for further use. By partial curing of the granules, a desired binding strength can be adjusted, such that the granules can be processed and disintegrated conveniently when subsequently compounded with the organic polymer. This can be advantageous when dispersing the biochar in the polymer matrix with conventional machinery, such as twin-screw extruders, under high shear forces.

The partial curing can be adjusted such that the granules have a desired stability. Typically, this stability is adjusted such that the granules are disintegrated when mixed and compounded with the organic polymer in the moulding composition. Preferably, during compounding the granules are disintegrated at least partially, such that the biochar particles are released and can be distributed uniformly in the organic polymer matrix.

Subject of the invention is also a method for producing the inventive granulate, comprising the steps of
(i.) mixing biochar particles with an aqueous composition comprising tannin,
(ii.) preparing granules from the composition, and
(iii.) drying the granules.

The granulate consists of granules. Such a granulate is advantageous, because flowable granules can be handled conveniently, for example by pouring. Preferably, the granules are agglomerates. This means that the granules are not compressed in a form. Agglomerates can be formed when biochar particles are agitated in the presence of the tannin binder, such that they adhere to each other. Granulation can be carried out with conventional methods and devices. For example, methods for providing granulates from biochar and binders by drum granulation are described in Briens and Bowdon-Green, 2020. As known in the art, the size and structure of the granules can be adjusted by the process conditions, such as the time and temperature for agglomeration and drying, the type of agitation, binder composition and water content. Agglomeration can be advantageous, because the biochar particles are only loosely attached to each other in the granules. Thus, the granules can disassemble at least partially during compounding, and biochar particles or smaller aggregates, which are coated with the tannin binder, can be mixed intimately with the organic polymer. In a preferred embodiment, the granules are approximately spherical. Spherical granules can be produced with conventional granulation devices in convenient and simple methods. In a preferred embodiment, the granulation is carried out at elevated temperature, for example between 60°C and 120°C, preferably between 80°C and 100°C. This can be advantageous for supporting (partial) curing of the binder.

It is advantageous that biochar and tannin are both obtained from biomass. Therefore, the carbon footprint of the biochar granules is especially advantageous. Preferably, essentially all components of the granules, preferably at least > 95% or > 99 % by weight, more preferably 100%, are from natural origin and/or biomass.

Subject of the invention is also a method for producing a shaped object for construction applications, comprising the steps
(a) providing a composition which comprises an organic polymer and a granulate of the invention,
(b) moulding the composition, and
(c) consolidating the moulded composition.

The composition for moulding is preferably intimately mixed, for example with a static mixer or extruder. Typically, the composition for moulding a liquid or paste of desired viscosity. The desired viscosity can be adjusted by heating and/or additives. In step (b), the composition is moulded. The composition is filled into the moulding form (the mould) and subjected to heat and pressure. Preferably, the temperature for compounding and/or moulding is between 120°C and 200°C, specifically between 140°C and 180°C. Thereby, a moulded part is obtained, which can be removed from the mould before or after consolidation. Devices and methods for compounding and moulding polymers are commercially available and well known in the art.

In step (c), the moulded part is consolidated and becomes the shaped object. The form of the shaped object corresponds to the moulding form. Depending on the composition, the moulded part may be dried and/or cured. Preferably, the moulded part is cured, which means that covalent bonds are formed. Curing is preferably supported by heating to a temperature as specified above for moulding. By heating for an appropriate time, the tannin binder, which may already be cured partially, can be fully cured. The shaped part should be cured completely to attain the maximum stability. Preferably, the consolidation temperature is between 120°C and 200°C, specifically between 140°C and 180°C.

Preferably, the process is carried out such that the granules are disintegrated and the biochar particles become dispersed uniformly in the product. The biochar functions as a filler in the product. At least in part, the tannin remains on the surface of the biochar particles. Thereby, the tannin can render the surface more compatible to the organic polymer and support intimate blending. Accordingly, a shaped object is obtainable which has a defined shape, high mechanical stability, and a high content of biochar filler which is evenly dispersed in the composite material.

In principle, any organic polymer can be used in the process which can be moulded. The organic polymer can be a thermoplastic or elastomer. For example, the polymer can be a polyamide, polyolefin, such as polyethylene or polypropylene, polyester, polyurethane, silicone, acrylic polymer or rubber, or a copolymer or mixture thereof. Preferably, the polymer is a synthetic polymer, which can be advantageous for moulding. Preferably, the polymer is recycled and/or bio-based, which is advantageous for the overall environmental balance.

In a preferred embodiment, the polymer is thermoplastic. When thermoplastic polymers are used, the moulded part is obtained from a polymer melt, in which the biochar from the granules becomes dispersed. For example, the thermoplastic polymer can be polyolefin, polyamide, acrylonitrile butadiene styrene (ABS) or polylactide, or mixtures thereof. Preferably, the thermoplastic polymer is polyethylene, polypropylene or polyamide. It was found that the granules are highly compatible with such thermoplastic polymers, such that shaped objects with high mechanical stability can be obtained.

In a preferred embodiment, the polymer is relatively hydrophobic. Since the inventive granulate is compatible with hydrophobic polymers, such as polyolefins and polyamides, stable composites can be produced from such polymers which comprise high levels of biochar.

In another preferred embodiment, the polymer is polyolefin, such as polyethylene or polypropylene. In a highly preferred embodiment, the thermoplastic polymer is polyethylene. The polyethylene can be HDPE (high density polyethylene). It was found that highly stable shaped objects can be obtained based on polyethylene. This is advantageous, because polyethylene is available in high amounts and at low costs, and can be recycled conveniently. Thus, respective materials are suitable for large scale building applications and permanent carbon storage.

In a preferred embodiment, the thermoplastic polymer is polyamide. Polyamides are characterized by repetitive amide bonds in the polymer chain. The polyamide can be aliphatic polyamide, polyphthalamide or aromatic polyamide. Preferably, the polyamide is aliphatic, such as PA6 or PA66. The inventive shaped object can be especially advantageous for polyamide, because the moisture content of the tannin-impregnated biochar particles is relatively low. Therefore, undesirably hydrolysis of the polyamide can be avoided, and the composite material can remain stable over long time periods.

In a preferred embodiment, the organic polymer is not curable. Thus, it does not comprise reactive groups, such as epoxy, vinyl, diene or silyl groups, or sulfur in any form; and/or other functional groups, which are crosslinked under the conditions when the granulate and shaped part are prepared. Preferably, the polymer does not comprise reactive groups such as hydroxyl, carboxyl or amine groups, which are reacted when the granulate and shaped part are prepared. According to the invention, stable composite materials can be obtained even when the polymer is not cured. This is advantageous, because systems with curable polymers are generally more expensive, more difficult to control, and also more difficult to recycle. In another embodiment, the organic polymer is a curable polymer, such as a rubber, and comprises reactive groups for curing, such as vinyl or epoxy groups.

It is preferred that the organic polymer is not hydrophilic, and especially that the polymer does not comprise hydrophilic functional groups, such as hydroxyl or carboxyl groups. Preferably, the organic polymer is not a natural hydrophilic polymer, such as cellulose, protein, collagen or starch. Such hydrophilic organic polymers are typically processed from aqueous solutions, and thus they cannot be moulded conveniently as thermoplastic polymers in a process as described above.

According to the invention, it was found that the shaped objects can have high stability, even when high levels of biochar are included. Thus, the shaped objects are highly suitable for construction applications, which enable permanent and efficient carbon storage. Without being bound to theory, it is assumed that the tannin binder can advantageously promote the compatibility of organic polymers and the biochar, thereby mediating intimate mixing. Moreover, it was found that the inventive granules have a low moisture uptake, which can be advantageous for stability of the composite material. Preferably, the moisture uptake of the granules after 72 hours, at 23°C and 65% RH (relative humidity) is less than 5%, more preferably less than 3% or even less than 2%. It was found that the moisture uptake is considerately lower than for pure biochar, or when compared to biochar impregnated with other binders.

Subject of the invention is also a shaped object, comprising an organic polymer and biochar particles which are impregnated with a tannin binder. The shaped object is obtainable by a method of the invention as outlined above. A shaped object is a three-dimensional object (body, part) which has a defined form. The form is given to the object deliberately in the production process. Thus, it is not the result of a random process. For example, the shaped object could be a brick or panel. The shape is conferred to the object in moulding step (b). Preferably, a plurality of shaped objects is produced which have the same shape and which can be used in large scale applications. Preferably, the process is continuous, which is also advantageous for large scale application.

The shaped object is a composite material. The organic polymer forms a matrix, in which biochar particles are distributed. Thus, the biochar functions as a filler. Preferably, the granules are not detectable in the composite material anymore, because they have been disintegrated in the production process, especially during mixing and compounding. In a preferred embodiment, the composite material comprises 20 to 80 wt.% biochar. It is especially preferred that the ratio of biochar in the composite is at least 30 wt.%, at least 50 wt.%, or at least 70 wt.%. The environmental footprint can be especially advantageous when high amounts of biochar are included. Preferably, the shaped part comprises and 20 to 80 wt.% organic polymers.

Preferably, the shaped object comprises, or consists of,
(A) 80% to 20%, preferably 30% to 70%, organic polymer, and
(B) 20% to 80%, preferably 30% to 70%, of biochar impregnated with the tannin binder.
wherein the % relate to weight. The shaped object may also comprise additives (c), for example up to 20 wt.%, or up to 10 wt.%. Preferably, the total amount of components (A), (B) and (C) is 100%. More preferably, the composite material comprises 40 to 80 wt.% biochar and 20 to 60 wt.% polymer.

According to the invention, it is advantageous that the shaped objects can be obtained easily, uniformly and in large numbers by moulding. The shaped object has a defined three-dimensional form. Typically, the length in one direction is at least 5cm, more preferably at least 10 cm or at least 20 cm, and/or the weight is at least 50 g, preferably at least 100 g. For example, the shaped object can have a length between 5 cm and 2 m, and/or a weight between 50 g and 10 kg. After moulding, the form can be modified, for example by cutting or polishing. Accordingly, the shaped object is not a granulate.

In an embodiment, the shaped object is dense, and thus not porous. A dense material can be advantageous, because it can store a higher amount of carbon per volume. Further, the stability and barrier properties can be higher. In a dense material, the polymer matrix is not porous. However, the biochar which is embedded in the polymer matrix comprises micropores. Without being bound to theory, it is assumed that in the inventive granulate, the tannin binder can infiltrate the biochar micropores at least in part. This is advantageous for stability of the granules and shaped part, because the bonding strength between the biochar and tannin binder is increased. Moreover, the density of the shaped object can be increased, because the total void space is reduced. For example, it was found that the bulk density of the granules can be above 0.3 g/cm³, and even above 0.4 g/cm³, preferably in the range of 0.4 to 0.45 g/cm³. In comparison, the bulk density of pure biochar, or biochar impregnated with other conventional binders, is significantly lower. The high density is advantageous, because the stability, barrier function and carbon footprint of the shaped object can be improved.

In a preferred embodiment, the shaped object comprises at least one additional filler or reinforcing agent, such as fibers, which is different from biochar. It is preferred that additional filler or reinforcing agent is also based on natural materials, and thus has a good environmental footprint. Additional fillers could be added for modifying the properties, for example by including colour pigments or conductive particles. Fibres, especially glass or carbon fibres, can be added for increasing and modifying mechanical stability. Preferably, the amount of additional fillers and/or reinforcing agents is less than 20 wt.%, preferably less than 10 wt.%, for example in the range of 1 to 20 wt.% or 2 to 10 wt.%.

The composite material and shaped object may comprise at least one additive, which is not a structural polymer, a filler or reinforcing agent. For example, the additive can be selected from processing aids, such as lubricants, plasticizers, colorants, flame retardants, thermal stabilizers and compatibilizers. Lubricants can improve workability during compounding or moulding. For example, the processing aid can be a fatty acid salt, such as zinc or calcium stearate, which is for example available under the trademark Ligastar from Peter Greven, DE. Such additives can also confer desired properties to the composite material and shaped part, such as colour or stability. Preferably, the amount of additives is up to 5 wt.% or up to 2 wt.%, for example in the range of 0.01 to 5 wt.% or 0.1 to 2 wt.%.

Preferably, the shaped object is rigid and stiff, and thus not elastic. Preferably, the tensile modulus is at least 4000 N/mm², more preferably at least 5000 N/mm², preferably between 4000 and 8000 N/mm², as determined according to ISO 527-1:2019. Rigid materials can be advantageous for construction applications because of their high dimensional stability. Preferably, the tensile strength is high, for example >20 MPa, preferably >22 MPa, or even >25 MPa, as determined according to ISO 527-1:2019. The high tensile strength is advantageous for building applications, because the material can withstand mechanical stress and strain.

Preferably, the shaped object is suitable for use in construction applications. Subject of the invention is also a construction material, comprising the inventive shaped object. Subject of the invention is also the use of the granulate of the invention for producing construction materials. Construction applications are especially applications in constructional engineering and architecture. They comprise building applications, but also infrastructure such as bridges or tunnels. Preferably, the construction material or shaped object is a panel, insulation board, building part or building block. In preferred embodiments, the building material is a panel for walls, an insulation board, a building part, or a block for assembling building parts, such as walls, or a structural part. A panel is a flat object for covering a building part, such as a wall, floor or furniture surface. The use as a panel is advantageous because of the high stability of the composite material. Since the composite material can be mechanically, thermally and chemically stable, the panel can shield the substrate to which it is mounted.

Since the composite material of the present invention is a shaped and moulded object, it is different from materials in the art which are produced differently and for other purposes, for example as an adsorptive for soil or water cleaning, catalyst or filter material, and especially from powders or granulates based on organic polymers.

The construction material may comprise the shaped object and at least one further component or material. For example, it can be a laminate from two, three or more layers. In a preferred embodiment, the shaped object comprises a coating. For example, a functional coating can confer a desired property to the shaped object. The coating may confer colour and/or texture to the surface. The coating could be a protective coating, for example against moisture, UV radiation, mechanical damage or weathering. Since biochar confers a dark colour to the composite material, a coloured coating may be desired. Coatings can be applied by conventional means, such as liquid coating, for example with resins, impregnation, electron scattering (Trespa process), physical or chemical vapor deposition, lamination and the like. The coating may cover the shaped object completely or partially, for example only on one surface.

The inventive shaped objects, methods and construction materials solve the problem underlying the invention. A stable composite material is provided, which can be used in construction applications as a carbon sink for long-term storage of carbon from the atmosphere. The shaped objects of the invention can have high mechanical and dimensional stability, even when comprising relatively high amounts of biochar. Further, a granulate is provided for convenient and efficient handling and production of shaped parts by moulding.

### Examples

### Example 1: Binder preparation

Biochar sourced from beech wood was sieved to obtain particle size distribution of <63 µm. The sieved fines are further dried in an oven to reach moisture content ≤ 6 %. Aqueous binders were prepared based on tannin. For comparison, various aqueous binders were prepared with other binder components. The various binders and procedures are outlined in the following.

### Tannin binder

Tannic acid was mixed in distilled water at about 35 - 50 wt.%. The pH value was adjusted to 11 to 12 by addition of NaOH and hexamine solution was added (6 -10 % dry weight of hexamine to dry weight of tannins).

### Polyvinyl alcohol binder

Polyvinyl alcohol was prepared by melting 10 wt.% PVA in distilled water at 90°C for 30 mins. The obtained liquid PVA binder is cooled to room temperature.

### Sodium silicate

A sodium silicate binder was prepared by diluting sodium silicate solution (dry weight content between 20 wt% and 35 wt%) with distilled water. Polyethylene glycol was added as a wetting agent to a final polyethylene glycol concentration of 0.5 wt%.

### Hydroxy methyl furfural

Fructose and water as a solvent were added to a three-neck flask, equipped with a thermo-element and a reflux condenser. The dissolved carbohydrate feedstock was heated to 60 °C. Heating and stirring was carried out with a hot-plate magnetic stirrer. The first half of the bis(hexamethylene)triamine was added at 60 °C and left to react for 20 min. The solution was cooled to room temperature. The second portion of the bis(hexamethylene)triamine was added directly before the analysis. The target solid content after the second addition of bis(hexamethylene)triamine was 55 wt.-%.

### Example 2: Granulation

Granulates were prepared from the biochar powder and binders described in example 1. The biochar was mixed with the binder at room temperature in a flask with overhead stirrer. The rotational speed of the stirrer could be altered between 0 - 500 rpm. Production of the biochar granules for each batch was repeated twice. Biochar fines (50 g) were placed in a flask under stirring at the desired rotational speed for 30 secs to pre-mix, before a certain amount of binder was added manually using a pressure sprayer. For each experiment, the liquid binder was pre-weighed to achieve a targeted liquid binder to biochar ratio. The biochar/binder ratios are summarized in table 1.

After the specific agglomeration time, the granules were quickly removed from the flask and dried in an oven at given temperature, where the curable binders underwent pre-curing within the granules. After drying, all the granules (moisture content approx. 6%) were collected for further analysis and for compounding with HDPE. The conditions for agglomeration of binders are:

| Rotational speed | Drying temperature | Drying time | Pre-mix time | Agglomeration time |
|---|---|---|---|---|
| 70 rpm | 80-100°C | 30-60 min | 1 min | 2-3 min |

### Example 3: Compounding and moulding

The granules produced according to example 2 were compounded with high density polyethylene (HDPE, SHC7260^{™}, Braskem, DE) at a 50 : 50 weight ratio, with the addition of 0.6 % zinc stearate as lubricant (Ligstar, DE) in a kneader (Brabender PL 2100^{™}). In this step, further curing of the binders takes place. Initially, 24 g HDPE and 0.28 g lubricant were fed into the kneader and mixed for 4 min to ensure even melting of the polymer. Subsequently, 24 g of the biochar granulate was introduced into the kneader and mixed for 6 min to ensure homogenous blending and provide optimum time for the curable binders to undergo additional curing. The polymer could be mixed and compounded with the granules without substantial dusting. The obtained compound was shredded into small pellets and pressed into a 100 x 100 mm sample using a heat press.

### Conditions for compounding:

| Torque speed | Time | Temperature | Material amount |
|---|---|---|---|
| 60 rpm | 10 min | 170°C | 48,28 g |

### Process parameters for moulding:

| Pre-heating temp. | Press temp. | Pressing pressure | Pressing time |
|---|---|---|---|
| 110°C | 150°C | 250 KN | 3 min |

Once the compounded material was pressed, samples were cut into the required sample dimensions according to standard ISO 527 for further characterization.

### Example 4: Characterization of shaped objects

The bulk density, moisture uptake of the agglomerated biochar and the tensile strength, modulus and thermal degradation were investigated and reported.

### Tensile strength and Tensile modulus:

Tensile test specimens were cut out of the pressed sample using a CNC machine. The tensile samples were then examined with a tensile tester (Galdabini Quasar 25^{™}) according to ISO 527-1:2019.

### Moisture uptake:

The moisture absorption behaviour of the granules was explored in a constant temperature and humidity chamber. At the beginning of the testing process, the granules were dried in the oven at 80 °C, and then put into the testing chamber at 23°C temperature and a constant relative humidity of 60%. The mass of the granules was measured after 72 hours.

### Bulk density:

For the determination of bulk density (ρb), the biochar granules were used to fill a 250 ml cylinder, and then a value for ρb was calculated from the measured mass (Wg, g) divided by volume. The bulk density of each parameter studied was measured twice.

### Thermal stability:

The thermal stability of the compounds produced with agglomerated biochar was investigated using a thermogravimetric analyser (TGA, Mettler Toledo TGA 2^{™}). The compounds were broken into small pieces and a small unitary mono-block (approximately 10 mg) was analysed for each binder type. The degradation tests were carried out at atmospheric pressure with a nitrogen flow rate of 50 ml/min and the temperature was regulated as follows: continuous heating up to 800°C at 10°C/min.

The shaped parts prepared according to examples 1 to 3 above were tested. The results are summarized in table 1 below.

**Table 1: Conditions and results from examples with granulates and shaped parts prepared with different binders. Samples 4 and 5 with tannic acid were prepared according to the invention. Samples 1, 2, 3 and 6 are comparative. Sample 1 is a control without binder.**

| No. | binder type | binder | granule | granule | granule | granule | shaped part | shaped part |
|---|---|---|---|---|---|---|---|---|
| | | conc. | moisture content | bulk density | moisture uptake 72h, 23°C, 65% RH | residue after heating to 800°C | tensile strength | tensile modulus |
| | | % | % | g/cm³ | % | % | N/mm² | N/mm² |
| 1 | - | 0 | 4.55 | 0.26 | 4.93 | 46.5 | 21.5 | 3058 |
| 2 | polyvinyl alcohol | 2 | 2.88 | 0.32 | 9.95 | 47.1 | 13.5 | 4030 |
| 3 | sodium silicate | 7 | 4.25 | 0.31 | 8.46 | 44.6 | 20.2 | 4115 |
| 4 | tannic acid | 8 | 6.85 | 0.41 | 4.45 | 56.1 | 25.2 | 6028 |
| 6 | hydroxy methyl furfural | 10 | 6.77 | 0.36 | 10.86 | 36.8 | 20.9 | 4451 |

The results demonstrate that the shaped objects of the invention have high mechanical and dimensional stability, although they comprise a high amount of biochar filler. The inventive shaped object exhibits an advantageous combination of high tensile strength and tensile modulus. The stability is significantly higher than for the comparative composite obtained with pure biochar or different binders.

It is a further advantage that the bulk density of the inventive granules is higher than for comparative materials. It is assumed that the biochar pores can be infiltrated and filled at least partially with the tannin binder. It is also advantageous that moisture uptake of the granulate with tannin can be low. Therefore, the granulate and shaped object of the invention can have relatively low hydrophilicity, which is advantageous for stability of the organic polymer.

The shaped objects meet the requirements for building applications. Overall, a dense and stable material is provided, which can store high amounts of carbon, and which can be advantageously used for construction applications.

### Literature

Briens and Bowdon-Green, "A comparison of liquid binders for drum granulation of biochar powder", 2020, Powder Tech. 367, 487-496
Das et al., "Incorporation of Biochar to Improve Mechanical, Thermal and Electrical Properties of Polymer Composites", 2021, Polymers 13(16), 2663.
Peng et al., "Waste Plastics as an Effective Binder for Biochar Pelletization", 2021, Energy Fuels 35, 17, 13840-13846
Pongdong et al., "Influence of Filler from a Renewable Resource and Silane Coupling Agent on the Properties of Epoxidized Natural Rubber Vulcanizates", 2015, J. Chem., Article ID 796459.
Zhang et al., "The Dynamic Mechanical Analysis of Highly Filled Rice Husk Biochar/High-Density Polyethylene Composites", 2017, Polymers 9(11), 628.

## Claims

1. A granulate from granules, which comprise biochar particles which are impregnated with a tannin binder.

2. The granulate of claim 1, wherein the granules have an average diameter of 200 µm to 10 mm

3. The granulate of at least one of the preceding claims, wherein the biochar particles have an average particle size of 1 µm to 500 µm.

4. The granulate of at least one of the preceding claims, wherein the binder comprises a curing agent.

5. The granulate of claim 4, wherein the curing agent is an aldehyde, amine or anhydride.

6. The granulate of at least one of the preceding claims, wherein the tannin is in a partially cured state.

7. The granulate of at least one of the preceding claims, comprising
(i) 50% to 98 wt.% biochar, and
(ii) 2% to 50 wt.% tannin,
based on the total amount of solids.

8. A method for producing a granulate of at least one of the preceding claims, comprising the steps of
(i.) mixing biochar particles with an aqueous composition comprising tannin,
(ii.) preparing granules from the composition, and
(iii.) drying the granules.

9. A method for producing a shaped object for construction applications, comprising the steps
(a) providing a composition which comprises an organic polymer and a granulate of at least one of the preceding claims,
(b) moulding the composition, and
(c) consolidating the moulded composition.

10. The method according to claim 9, wherein the organic polymer is a thermoplastic polymer.

11. The method according to at least one of claims 9 and 10, wherein the organic polymer is polyethylene or polyamide.

12. A shaped object, comprising an organic polymer and biochar particles which are impregnated with a tannin binder, wherein the shaped object is preferably obtainable by a method of at least one of claims 9 to 11.

13. The shaped object of claims 12, which comprises
(A) 20% to 80% organic polymer, and
(B) 20% to 80% of biochar impregnated with the tannin binder,
wherein the amounts are in weight %, based on the total amount of solids.

14. A construction material, comprising the shaped object according to at least one of claims 12 to 13, wherein the construction material is preferably a panel, insulation board, building part or building block.

15. Use of a granulate of at least one of claims 1 to 7 for producing construction materials.
